# EUROPÄISCHE PATENTSCHRIFT

(11) **EP 4 598 860 B1**
(45) Veröffentlichungstag und Bekanntmachung des Hinweises auf die Patenterteilung: **16.09.2026**
(21) Anmeldenummer: 23742190.4
(22) Anmeldetag: 06.07.2023
(51) Int. Cl.: B66D 1/50, A01G 23/00

(54) **VORRICHTUNG UND VERFAHREN ZUM TRANSPORTIEREN VON HOLZ IN STEILEM GELÄNDE**
APPARATUS AND METHOD FOR TRANSPORTING WOOD IN STEEP TERRAIN
APPAREIL ET PROCÉDÉ DE TRANSPORT DE BOIS EN TERRAIN ESCARPÉ

(30) Priorität: 03.10.2022 AT 507622022
(43) Veröffentlichungstag der Anmeldung: 13.08.2025
(73) Patentinhaber: Konrad Forsttechnik GmbH, 9451 Preitenegg (AT); Ecoforst GmbH, 8612 Tragöß-St.Katharein (AT)
(72) Erfinder: KONRAD, Markus, 9451 Preitenegg (AT)
(74) Vertreter: Wirnsberger & Lerchbaum Patentanwälte OG
(86) Internationale Anmeldenummer: PCT/AT2023/060223
(87) Internationale Veröffentlichungsnummer: WO 2024/073783

(56) Entgegenhaltungen:
- EP-A1- 2 444 355
- JP-A- 2000 219 490
- US-A1- 2021 101 517

## Beschreibung

Die Erfindung betrifft eine Vorrichtung zum Transportieren von Holz in steilem Gelände. Weiter betrifft die Erfindung ein Verfahren zum Transportieren von Holz in steilem Gelände mit einer Vorrichtung.

Aus dem Stand der Technik sind Vorrichtungen und Verfahren der eingangs genannten Art bekannt geworden, wobei beispielsweise eine stationäre Winde und ein mobiles Transportfahrzeug zusammenwirken, um Holz entlang eines steilen Abhanges nach oben zu einem Transport, an welchem Holzstämme auf einen Lastwagen oder dergleichen verladen werden, transportieren zu können. Bei Verfahren und Vorrichtungen des Standes der Technik wird ein Teil einer zum Bewegen des Transportfahrzeuges und des Holzes benötigten Kraft durch die Winde und ein verbleibender Teil durch das Transportfahrzeug selbst aufgebracht, wobei beispielsweise durch die Transportwinde eine fixe Zugkraft im Seil oder eine fixe Windengeschwindigkeit vorgegeben werden und durch das Transportfahrzeug selbst, üblicherweise durch einen Fahrer manuell gesteuert, ein Verfahren quer zur Seilrichtung bewirkt wird, um beispielsweise unwegsames Gelände wie Wurzeln, Steine oder Abgründe, zu umfahren.

Eine Vorrichtung gemäß dem Oberbegriff des Anspruchs 1 ist aus der US 2021/101517 A1 bekannt.

Es hat sich gezeigt, dass bei Vorrichtungen und Verfahren des Standes der Technik einerseits nur eine geringe Effizienz erreicht wird und andererseits eine unerwünscht hohe Beschädigung des Bodens bzw. Waldbodens erfolgt.

Hier setzt die Erfindung an. Aufgabe der Erfindung ist es, eine Vorrichtung der eingangs genannten Art anzugeben, mit welcher Holz auch in steilem Gelände auf effiziente Weise bewegbar ist, wobei gleichzeitig eine Beschädigung des Bodens reduziert werden soll. Darüber hinaus soll ein derartiges Verfahren angegeben werden, mit welchem eine geringe Bodenbeschädigung bei gleichzeitig effizientem Transport ermöglicht ist.

Die erste Aufgabe wird erfindungsgemäß durch eine Vorrichtung der eingangs genannten Art gelöst, welche eine mobile Winde und ein über ein Seil mit der Winde verbindbares mobiles Transportfahrzeug mit einem Fahrwerk aufweist, wobei die Winde einen Windenantrieb zum Auf- bzw. Abwickeln des Seiles und das Transportfahrzeug einen Fahrantrieb zum Antrieb des Fahrwerkes aufweist und wobei das Transportfahrzeug und die Winde durch eine Datenverbindung verbunden sind, wobei das Transportfahrzeug einen Sensor zur Bestimmung einer Fahrtrichtung relativ zur Seilwinde aufweist und wobei eine Datenverarbeitungseinrichtung vorgesehen ist, welche mit dem Fahrantrieb und dem Windenantrieb verbunden ist, sodass durch die Datenverarbeitungseinrichtung eine Seilgeschwindigkeit und eine Fahrantriebsgeschwindigkeit abhängig von einer Fahrtrichtung des Transportfahrzeuges, insbesondere relativ zu einer Seilrichtung, automatisiert einstellbar sind.

Im Rahmen der Erfindung wurde erkannt, dass herkömmliche Vorrichtungen und Verfahren deshalb eine hohe Bodenbeschädigung und eine geringe Effizienz aufweisen, weil die Betätigung der Seilwinde und die Betätigung des Fahrantriebes nicht aufeinander abgestimmt werden. Beispielsweise arbeitet der Fahrantrieb dann gegen die Seilwinde, wenn das Transportfahrzeug quer zur Seilrichtung verfahren wird, beispielsweise um einen Baumstumpf oder dergleichen zu umfahren. Bei einer erfindungsgemäß ausgebildeten Vorrichtung erfolgt nun eine Abstimmung der Betätigung des Fahrantriebes und der Winde aufeinander, sodass beispielsweise bei einer Bewegung quer zur Seilrichtung eine Seilwindengeschwindigkeit bzw. Seilgeschwindigkeit reduziert werden und lediglich der Fahrantrieb entsprechend betätigt wird. Nur wenn die Fahrtrichtung des Transportfahrzeuges im Wesentlichen der Seilrichtung entspricht, entspricht auch die Seilgeschwindigkeit der Fahrantriebsgeschwindigkeit, mit welcher das Transportfahrzeug verfahren wird. Die bisher durch die Abweichung der Seilgeschwindigkeit von der Geschwindigkeit des Transportfahrzeuges in Seilrichtung abweichende Geschwindigkeit bedingte Bodenbeschädigung, welche durch eine Abstützung des Transportfahrzeuges gegen die Seilkraft bewirkt ist, wird dadurch auf besonders einfache Weise vermieden. Somit werden sowohl eine Abnützung des Fahrwerkes als auch eine Bodenbeschädigung vermieden.

Günstig ist es, wenn das Transportfahrzeug einen Vorderwagen und einen mit dem Vorderwagen um eine etwa vertikale Drehachse verbundenen Hinterwagen aufweist. Dies ermöglicht ein besonders gutes Lenken des Transportfahrzeuges auch in unwegsamem Gelände. Vorderwagen und Hinterwagen können dann beispielsweise über eine Knicklenkung verbunden sein.

Besonders bevorzugt ist vorgesehen, dass Vorderwagen und Hinterwagen gesonderte Fahrwerke aufweisen. Die Fahrwerke können als Raupenfahrwerke, Radfahrwerke oder dergleichen ausgebildet sein, um das Transportfahrzeug samt einem zu transportierenden Holz gegenüber einem Untergrund abzustützen.

Vorteilhaft ist es, wenn Vorderwagen und Hinterwagen unabhängig voneinander antreibbar sind, wobei insbesondere eine Antriebskraft am Vorderwagen von einer Antriebskraft am Hinterwagen und/oder eine Antriebsgeschwindigkeit des Vorderwagens von einer Antriebsgeschwindigkeit des Hinterwagens abweichen kann. Dies kann grundsätzlich mit unterschiedlichen Motoren für Vorderwagen und Hinterwagen erfolgen. Es kann jedoch auch nur ein einziger Motor vorgesehen sein, wobei eine Antriebsleistungs dieses Motors variabel zwischen Vorderwagen und Hinterwagen aufgeteilt wird, beispielsweise mittels Torque Vectoring.

Es hat sich bewährt, dass das Fahrwerk des Transportfahrzeuges als Raupenfahrwerk ausgebildet ist. Dies ermöglicht ein Bewegen des Transportfahrzeuges in unwegsamem Gelände auf besonders einfache Weise.

Günstig ist es, wenn das Transportfahrzeug eine Klemmeinrichtung zum Klemmen von Holz aufweist, welche insbesondere um eine vertikale Achse drehbar mit dem Fahrwerk verbunden ist.

Die Klemmeinrichtung kann dazu ausgebildet sein, zu transportierende Holzstämme an einer Seite aufzunehmen, sodass während eines Transportes des Holzes die Holzstämme an einem zweiten Ende an einem Untergrund schleifen. Bevorzugt ist vorgesehen, dass die Klemmeinrichtung zwei relativ zueinander um eine etwa horizontale Klemmachse schwenkbare Klemmschenkel aufweist, zwischen welchen Holzstämme klemmbar sind. Dies ermöglicht ein besonders einfaches und gleichzeitig robustes Klemmen und Transportieren von Holzstämmen auch in unwegsamem Gelände.

Günstig ist es, wenn das Transportfahrzeug einen Arm aufweist, welcher um eine vertikale Achse drehbar mit dem Fahrwerk verbunden ist, über welchen Arm das Seil derart mit dem Transportfahrzeug koppelbar ist, dass das Transportfahrzeug durch das Seil bewegbar ist. Auf diese Weise wird eine Einleitung einer über das Seil aufgebrachten Zugkraft, welche von der Winde aufgebracht wird, in das Transportfahrzeug etwa mittig bzw. schwerpunktnahe bewirkt, sodass ein günstiges Einleiten der Seilkraft in das Transportfahrzeug bewirkt ist. Besonders günstig ist es, wenn der Arm aus einer Mitte des Transportfahrzeuges auskragt, beispielsweise um mehr als einen Meter, sodass das Seil der Winde über den Arm außermittig mit dem Transportfahrzeug verbindbar ist, wobei über den etwa mittig am Transportfahrzeug um die Drehachse vertikal drehbaren Arm eine Krafteinleitung dennoch etwa mittig erfolgt. Dadurch ist eine günstige Krafteinleitung gewährleistet, wobei durch drehbare Befestigung des Armes um die vertikale Drehachse gleichzeitig ein Kollidieren des Seiles mit einem ebenfalls mittig am Transportfahrzeug befestigten Holz vermieden wird, wobei das Holz in der Regel ebenfalls um die vertikale Drehachse drehbar mit dem Transportfahrzeug verbunden ist, insbesondere über die Klemmeinrichtung.

Bevorzugt ist die Klemmeinrichtung ebenfalls etwa mittig bzw. scherpunktnahe am Transportfahrzeug angeordnet, sodass durch das Seil im Bereich der Klemmeinrichtung Kraft eingeleitet wird, um eine mechanische Belastung von Bauteilen des Transportfahrzeuges möglichst zu reduzieren.

Besonders günstig ist es, wenn der Arm mit einem mittleren Bereich des Transportfahrzeuges verbunden ist, insbesondere einem Bereich mittig zwischen Vorderwagen und Hinterwagen.

Das Transportfahrzeug kann somit beispielsweise einen Vorderwagen, einen um eine vertikale Achse drehbar mit dem Vorderwagen verbundenen Hinterwagen, eine um die vertikale Achse drehbar mit Vorderwagen und Hinterwagen verbundene Klemmeinrichtung und einen um die vertikale Achse drehbar mit Vorder- und Hinterwagen sowie der Klemmeinrichtung verbundenen Arm aufweisen, um ein möglichst gutes Transportieren von Holz auch in unwegsamem Gelände zu ermöglichen.

Insbesondere zur Aufzeichnung eines zurückgelegten Weges ist es günstig, wenn das Transportfahrzeug einen GPS-Sensor aufweist. Dadurch kann es ausreichend sein, mit dem Transportfahrzeug einen Weg zwischen Baumstümpfen, Felsen oder dergleichen einmalig manuell zurückzulegen, wonach der entsprechende Weg durch aufgezeichnete GPS-Koordinaten selbsttätig durch das Transportfahrzeug wiedergegeben bzw. zurückgelegt werden kann.

Besonders günstig ist es in dem Zusammenhang, wenn das Transportfahrzeug manuell, insbesondere mit einer Fernbedienung, betätigbar ist, wobei eine Datenverarbeitungseinrichtung vorgesehen ist, mit welcher ein Weg, den das Transportfahrzeug bei einer manuellen Betätigung zurücklegt, aufgezeichnet werden kann, wobei das Transportfahrzeug zum selbsttätigen Zurücklegen von Wegstrecken entsprechend zuvor aufgezeichneten Wegen eingerichtet ist.

Bei einem Abtransport von Holz an einem Hang wird somit bevorzugt zunächst an einem oberen Ende des Hanges die Winde positioniert, wonach ausgehend von einem windennahen Bereich gefällte Holzstämme mit dem Transportfahrzeug zur Winde hin transportiert werden, um dort auf einen Lastwagen oder dergleichen verladen zu werden, wonach Holzstämme aus immer weiter von der Winde entfernten Bereichen zur Winde hin transportiert werden. Ein Weg des Transportfahrzeuges von einem windennahen Bereich in einen weiter von der Winde entfernten Bereich kann dabei bei erstmaligem Verfahren manuell mit der Fernbedienung vorgegeben werden, wobei diese manuell vorgegebenen Wege aufgezeichnet werden. In späteren Verfahrensschritten, in welchen das Transportfahrzeug in noch weiter von der Winde entfernte Bereiche verfahren wird, kann dann das Transportfahrzeug selbstständig zuvor aufgezeichnete Wege zurücklegen und muss manuell nur in jenen Bereichen verfahren werden, die in vorhergehenden Verfahrensschritten noch nicht befahren wurden. Ein Verfahren aus den windenfernen Bereichen zurück zur Winde kann somit immer automatisiert entlang des Weges erfolgen, der bei einem Weg von der Winde in den windenfernen Bereich zuvor aufgezeichnet wurde. Dadurch ist ein besonders effizient umsetzbares Verfahren erreicht.

Es hat sich bewährt, dass die Vorrichtung dazu eingerichtet ist, das Transportfahrzeug mithilfe der Winde einen Hang hinauf zu bewegen, wobei eine Aufteilung einer Antriebsleistung zwischen Winde und Transportfahrzeug bzw. zwischen Windenantrieb und Fahrantrieb in der Weise erfolgt, dass vom Transportfahrzeug nur jener Teil der Antriebsleistung aufgebracht wird, der für eine Bewegung des Transportfahrzeuges quer zur Seilrichtung erforderlich ist, um eine Belastung für einen Untergrund zu minimieren. Dies gewährleistet darüber hinaus, dass am Transportfahrzeug selbst nur eine vergleichsweise geringe Antriebsleistung und ein vergleichsweise leichter Energiespeicher vorgesehen sein können, sodass ein insgesamt leichtgewichtiges Transportfahrzeug erreicht wird, wodurch eine Bodenbeschädigung weiter minimiert ist. So kann das Transportfahrzeug häufig nicht entlang einer direkten Verbindungslinie von Transportfahrzeug und Winde verfahren werden, beispielsweise aufgrund eines durch Baumstümpfe blockierten Weges, und muss quer zu dieser Verbindungslinie bzw. quer zur Seilrichtung verfahren werden. Durch eine Abstimmung der Seilgeschwindigkeit auf die Geschwindigkeit und Richtung des Transportfahrzeuges kann leicht vermieden werden, dass Fahrantrieb und Windenantrieb gegeneinander arbeiten und der Untergrund beschädigt wird.

Die weitere Aufgabe wird erfindungsgemäß durch ein Verfahren der eingangs genannten Art gelöst, wobei die Vorrichtung eine mobile Winde und eine über ein Seil mit der Winde verbundenes mobiles Transportfahrzeug aufweist, wobei die Vorrichtung bevorzugt erfindungsgemäß ausgebildet ist, wobei Winde und Transportfahrzeug während des Verfahrens über eine Datenverbindung verbunden sind und eine aktuell Fahrtrichtung des Transportfahrzeuges automatisiert erfasst wird, wobei während des Verfahrens des Transportfahrzeuges zur Winde hin eine Seilgeschwindigkeit und eine Fahrantriebsgeschwindigkeit abhängig von der Fahrtrichtung des Transportfahrzeuges durch eine Datenverarbeitungseinrichtung aufeinander abgestimmt werden.

Durch ein Abstimmen der Fahrantriebsgeschwindigkeit und der Seilgeschwindigket aufeinander abhängig von der Fahrtrichtung des Transportfahrzeuges relativ zur Seilrichtung wird vermieden, dass Fahrantrieb und Winde gegeneinander arbeiten, wodurch sowohl eine Beschädigung des Untergrundes als auch hohe mechanische Belastungen des Transportfahrzeuges vermieden werden können.

Günstig ist, wenn das Holz mit dem Transportfahrzeug von einem windenfernen Bereich zu einem windennahen Bereich transportiert wird, wonach das Holz im windennahen Bereich vom Transportfahrzeug abgeladen wird und das Transportfahrzeug ohne Beladung vom windennahen Bereich in einen windenfernen Bereich verfahren wird, um weiteres Holz aufzunehmen. Üblicherweise wird die mobile Winde an einem oberen Ende eines Hanges angeordnet, welcher abgeholzt wurde und von welchem das Holz abzutransportieren ist, sodass von der mobilen Winde ein Seil nach unten zum Transportfahrzeug ragt, an welchem Seil das Transportfahrzeug befestigt ist, insbesondere lösbar, um das Transportfahrzeug mittels der Winde nach oben ziehen zu können.

Günstig ist es, wenn das Verfahren vom windennahen Bereich in den windenfernen Bereich zumindest teilweise durch eine manuelle Steuerung erfolgt, wobei ein Weg, welchen das Transportfahrzeug während der manuellen Steuerung zurücklegt, durch eine Datenverarbeitungseinrichtung aufgezeichnet wird.

Es hat sich bewährt, dass das Verfahren vom windennahen Bereich in den windenfernen Bereich zumindest teilweise automatisiert entlang eines in einem vorhergehenden Verfahrensschritt aufgezeichneten Weges erfolgt. Auf diese Weise ist es ausreichend, wenn neue Wegstrecken manuell vorgegeben werden. Beispielsweise kann bei einem Abtransport von gefälltem Holz an einem steilen Hang damit begonnen werden, Holz von einem windennahen Bereich abzutransportieren, wonach das Transportfahrzeug Schritt für Schritt in immer windenfernere Bereiche verfahren wird, wobei nur in Bereiche, welche weiter von der Winde entfernt sind als bereits zuvor befahrene Bereiche manuell mittels der Steuerung, beispielsweise über eine Fernbedienung, gefahren werden muss und bekannte Wege durch das Transportfahrzeug selbsttätig zurückgelegt werden können.

Grundsätzlich wäre es auch denkbar, dass das Transportfahrzeug gänzlich selbsttätig am Hang verfährt, beispielsweise als autonomes Fahrzeug, das mittels Sensoren wie Kameras, Radar-, Ultraschallsensoren und dergleichen gesteuert ist.

Günstig ist es, wenn eine durch die Winde auf das Transportfahrzeug aufgebrachte Kraft und eine durch ein Fahrwerk des Transportfahrzeuges aufgebrachte Kraft durch eine Datenverarbeitungseinrichtung derart aufeinander abgestimmt werden, dass ein möglichst großer Anteil einer für eine Bewegung des Transportfahrzeuges von einem windenfernen Bereich in einen windennahen Bereich erforderliche Kraft durch die Winde und das Seil aufgebracht werden und lediglich eine darüber hinausgehende Kraft, insbesondere für eine Bewegung quer zur Seilrichtung durch das Transportfahrzeug aufgebracht wird. Dies gewährleistet eine minimale Bodenverletzung.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 einen Hang mit einer erfindungsgemäßen Vorrichtung in schematischer Darstellung;
Fig. 2 bis 4 ein erfindungsgemäßes Transportfahrzeug in unterschiedlichen Ansichten.

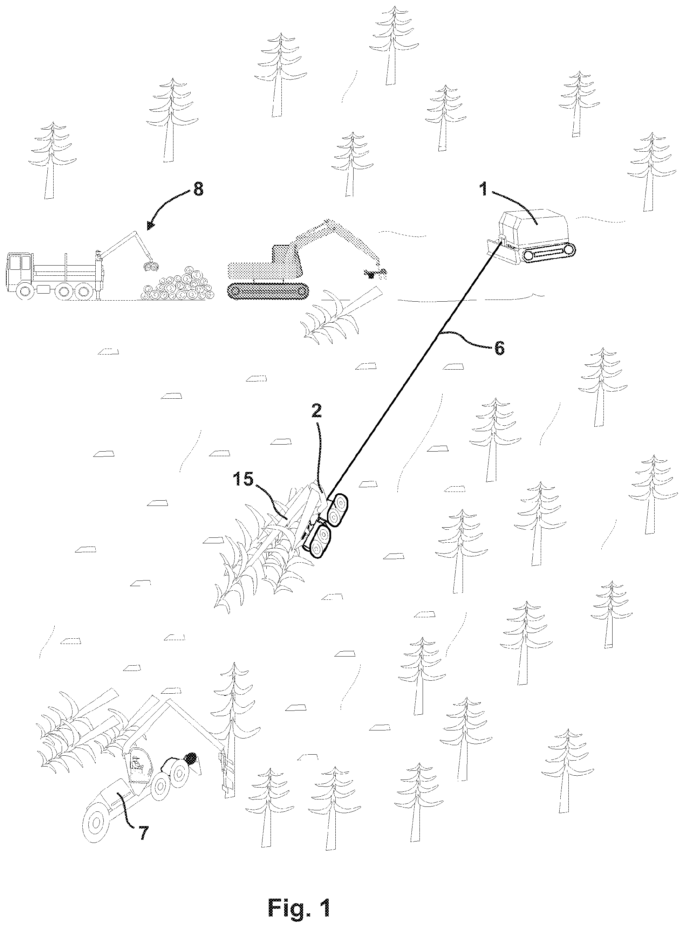

Fig. 1 zeigt einen Hang mit einer erfindungsgemäßen Vorrichtung bei der Durchführung eines erfindungsgemäßen Verfahrens.

Wie ersichtlich ist an einem oberen Ende des Hanges die mobile Winde 1 angeordnet, welche über ein Seil 6 mit einem mobilen Transportfahrzeug 2 verbunden ist, mit welchem Transportfahrzeug 2 Baumstämme, die in einem unteren bzw. windenfernen Bereich des Hanges beispielsweise mit einem Harvester 7 gefällt werden, entlang des Hanges nach oben in einen windennahen Bereich transportiert werden, von welchem die Baumstämme abtransportiert werden, beispielsweise mit einem Lastwagen 8. Winde 1 und Transportfahrzeug 2 weisen jeweils Antriebe auf, wobei die Winde 1 einen Windenantrieb zum Auf- bzw. Abwickeln des Seiles 6 und das Transportfahrzeug 2 einen Fahrantrieb zum Antrieb eines Fahrwerkes des Transportfahrzeuges 2 aufweist. Darüber hinaus sind Winde 1 und Transportfahrzeug 2 über eine Datenverbindung, im Ausführungsbeispiel eine drahtlose Datenverbindung, verbunden, sodass mittels einer Datenverarbeitungseinrichtung, welche beispielsweise in der Winde 1, im Transportfahrzeug 2 oder an einem dritten Ort angeordnet sein kann, Windenantrieb und Fahrwerksantrieb aufeinander abgestimmt werden.

Das Transportfahrzeug 2 weist darüber hinaus einen oder mehrere Sensoren auf, insbesondere einen GPS-Sensor, einen Beschleunigungssensor und/oder einen Neigungssensor, mit welchen eine Fahrtrichtung 16 des Transportfahrzeuges 2 sowie eine Seilrichtung 13 erfassbar sind. Letztere kann auch über einen Winkelsensor erfasst werden, welcher einerseits mit Vorderwagen 4 und/oder Hinterwagen 5 des Transportfahrzeuges 2 sowie einem Arm 12 des Transportfahrzeuges 2 verbunden ist, über welchen Arm 12, der um eine vertikale Achse drehbar mit Vorderwagen 4 und Hinterwagen 5 verbunden ist, das Seil 6 mit dem Transportfahrzeug 2 verbunden ist, sodass sich der Arm 12 üblicherweise in Seilrichtung 13 ausrichtet. Daten der Sensoren sind ebenfalls an die Datenverarbeitungseinrichtung übermittelbar, sodass mit der Datenverarbeitungseinrichtung Windenantrieb und Fahrwerksantrieb abhängig von einer Fahrtrichtung 16 des Transportfahrzeuges 2 relativ zur Seilrichtung 13 aufeinander abgestimmt werden können, wodurch beispielsweise bei einer Bewegung des Transportfahrzeuges 2 quer zur Fahrtrichtung 16 eine entsprechend geringe Seilgeschwindigkeit eingestellt werden kann, um eine Bodenbeschädigung zu vermeiden.

Bei einem Transport von Baumstämmen an dargestelltem Hang wird üblicherweise damit begonnen, Baumstämme in einem windennahen Bereich aufzunehmen. Zum Auf- und Abladen der Baumstämme kann aus dem Stand der Technik bekannte Vorrichtungen und Verfahren zurückgegriffen werden, beispielsweise auf Ladekräne und dergleichen. Nach einem Aufladen der Baumstämme auf das Transportfahrzeug 2 werden diese am Transportfahrzeug 2 fixiert, und zwar mittels der durch um eine horizontale Klemmachse 11 schwenkbare Klemmschenkel 10. In weiterer Folge werden die Baumstämme durch das Transportfahrzeug 2 zur Winde 1 hin transportiert, wo die Baumstämme vom Transportfahrzeug 2 abgeladen werden, beispielsweise auf einen Lastwagen 8.

Anschließend wird das entladende Transportfahrzeug 2 in einen weiter von der Winde 1 entfernten Bereich bzw. einen windenfernen Bereich verfahren, üblicherweise einen Bereich, welcher noch weiter unterhalb der Winde 1 ist.

Ein Verfahren in diesen windenferneren Bereich kann manuell beispielsweise mit einer Fernsteuerung erfolgen, wobei das Transportfahrzeug 2 dazu eingerichtet ist, einen zurückgelegten Weg aufzuzeichnen, üblicherweise mittels eines oder mehrere GPS-Sensoren. Der auf diese Weise zurückgelegte und mittels der Datenverarbeitungsvorrichtung augezeichnete Weg kann anschließend vom Transportfahrzeug 2 bei einem Rückweg zur Winde 1 bzw. in den windennahen Bereich selbsttätig zurückgelegt werden, sodass kein weiterer manueller Lenkeingriff erforderlich ist.

Bei einem weiteren Verfahrensschritt, wobei das Transportfahrzeug 2 in einen noch weiter von der Winde 1 entfernteren Bereich verfahren wird, kann das Transportfahrzeug 2 dann bis zu einem zuvor erreichten Punkt automatisiert entsprechend des aufgezeichneten Weges verfahren werden und muss somit lediglich eine noch unbekannte neue Wegstrecke manuell gesteuert werden, um beispielsweise Baumstümpfe oder Felsen zu umfahren. Die manuelle Steuerung des Transportfahrzeuges 2 kann am Transportfahrzeug 2 selbst oder mittels einer Fernbedienung erfolgen.

Grundsätzlich wäre natürlich auch eine Umsetzung mit einem vollständig autonom verfahrbaren Transportfahrzeug 2 möglich.

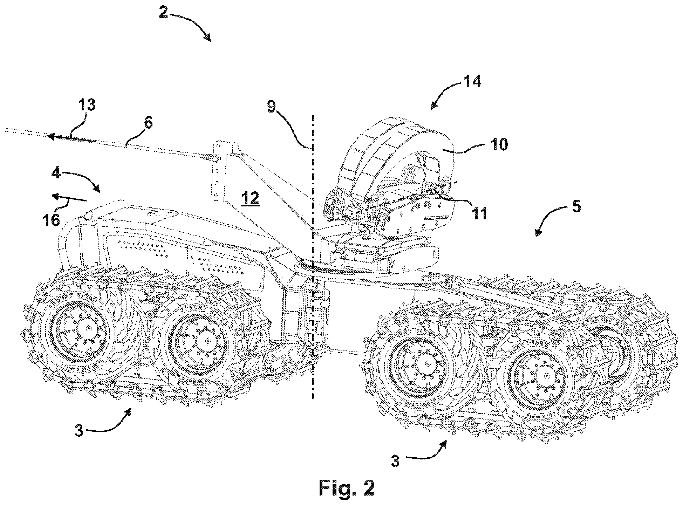

Fig. 2 bis 5 zeigen ein erfindungsgemäßes Transportfahrzeug 2 in unterschiedlichen Ansichten.

Wie ersichtlich weist das Transportfahrzeug 2 einen Vorderwagen 4 und einen um eine vertikale Drehachse 9 mit dem Vorderwagen 4 verbundenen Hinterwagen 5 auf, wobei Vorderwagen 4 und Hinterwagen 5 jeweils ein Raupenfahrwerk 3 aufweisen. Das Transportfahrzeug 2 ist somit mit einer Knicklenkung ausgebildet. Ein Motor ist üblicherweise im Vorderwagen 4 angeordnet, wenngleich grundsätzlich auch eine Ausbildung möglich ist, wobei sowohl im Vorderwagen 4 als auch im Hinterwagen 5 Motore positioniert sind, um die einzelnen Fahrwerke unabhängig voneinander anzutreiben. Wenn nur im Vorderwagen 4 ein Motor angeordnet ist, ist üblicherweise dennoch sowohl das Fahrwerk des Vorderwagens 4 als auch das Fahrwerk des Hinterwagens 5 durch den Motor angetrieben, wobei auch hier vorgesehen sein kann, dass die Fahrwerke von Vorderwagen 4 und Hinterwagen 5 unabhängig voneinander angetrieben werden können, insbesondere mit unterschiedlichen Kräften, was beispielsweise mittels Torque-Vectoring umgesetzt sein kann.

In der in Fig. 2 dargestellten Position entspricht die Fahrtrichtung 16 etwa der Seilrichtung 13. In dieser Position kann somit grundsätzlich die zum Antrieb des Transportfahrzeuges 2 benötigte Kraft nahezu vollständig von der Winde 1 aufgebracht werden, sodass der Motor des Transportfahrzeuges 2 durch die Datenverarbeitungseinrichtung gesteuert mit entsprechend geringer Leistung betrieben werden kann, wodurch ein geringer Treibstoffbedarf im Transportfahrzeug 2 und somit eine geringe Anzahl an Betankungen erreicht wird.

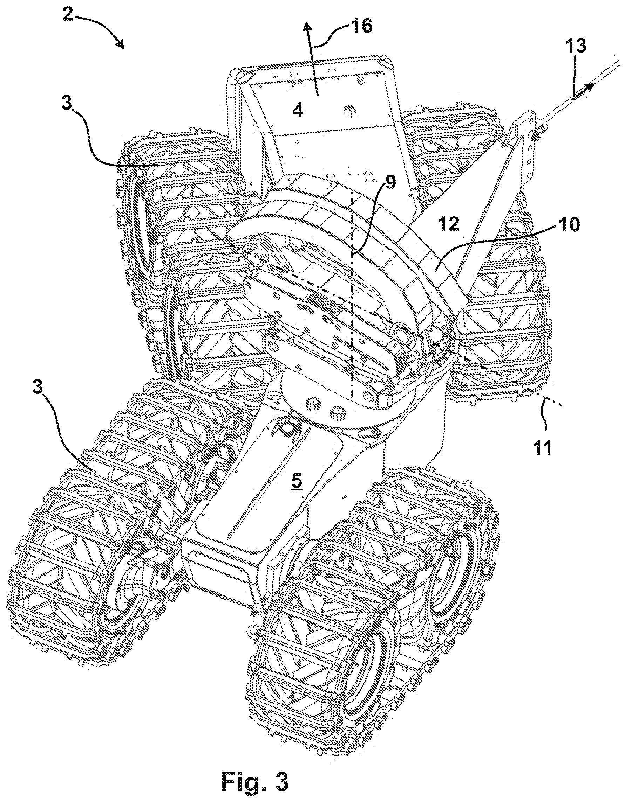

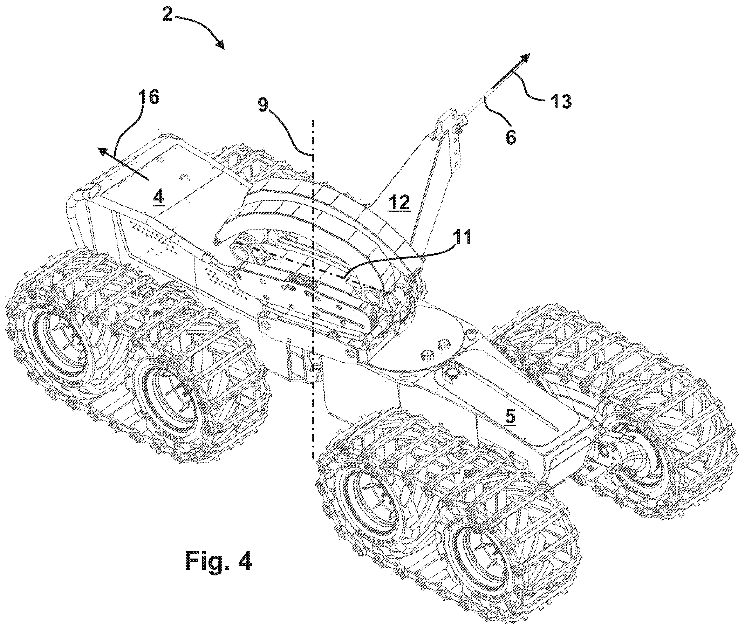

In den Fig. 3 und 4 dargestellten Situationen weicht die Seilrichtung 13 stärker von der Fahrtrichtung 16 des Transportfahrzeuges 2 ab. Dieser Fall kann beispielsweise eintreten, wenn das Transportfahrzeug 2 quer zur Hangrichtung verfahren wird, beispielsweise um einen Baumstumpf oder einen Felsen zu umfahren. In diesem Fall wird eine Seilgeschwindigkeit reduziert, sodass die Seilgeschwindigkeit beispielsweise nur dem Anteil der Fahrgeschwindigkeit des Transportfahrzeuges 2 in Seilrichtung 13 entspricht. Auf diese Weise wird das Transportfahrzeug 2 durch das Seil 6 bzw. die Winde 1 in Seilrichtung 13, insbesondere in vertikaler Richtung, stabilisiert und erfolgt ein Verfahren quer zur Seilrichtung 13 durch den Fahrtantrieb, sodass der Fahrtantrieb in diesen Situationen stärker betätigt wird als in der in Fig. 1 dargestellten Situation.

Das Transportfahrzeug 2 weist wie dargestellt eine mittig zwischen Vorderwagen 4 und Hinterwagen 5 angeordnete Klemmeinrichtung 14 zum Klemmen von Holzstämmen 15 auf, welche Klemmeinrichtung 14 zwei relativ zueinander um eine etwa horizontale Klemmachse 11 schwenkbare Klemmschenkel 10 aufweist. Die Klemmeinrichtung 14 ist um die vertikale Drehachse 9 drehbar mit Vorderwagen 4 und Hinterwagen 5 verbunden, sodass die Holzstämme 15 ebenfalls um die vertikale Drehachse 9 drehbar mit dem Transportfahrzeug 2 verbunden sein können.

Darüber hinaus ist mit Vorderwagen 4 und Hinterwagen 5 um die vertikale Drehachse 9 schwenkbar ein Arm 12 verbunden, durch welchen eine Seilkraft in das Transportfahrzeug 2 eingeleitet werden kann.

Wie ersichtlich ist der Arm 12 mit dem Seil 6 verbindbar, welches durch die Winde 1 auf- bzw. abgewickelt werden kann. Der Arm 12 erstreckt sich von einem mittigen Bereich des Transportfahrzeuges 2 in einen seitlichen Bereich bzw. kragt aus, sodass ein Kollidieren des Armes 12 mit zu transportierenden Holzstämmen 15 vermieden ist.

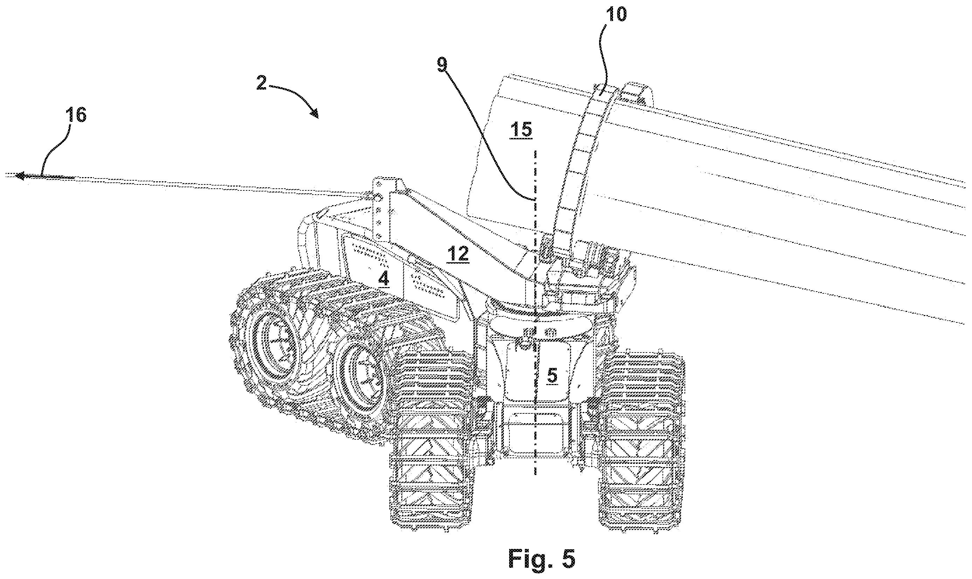

Fig. 5 zeigt das Transportfahrzeug 2 mit in der Klemmeinrichtung 14 geklemmten Holzstämmen 15. Wie hier besonders gut ersichtlich ist, werden sowohl eine Kraft der Holzstämme 15 als auch eine Seilkraft etwa mittig in das Transportfahrzeug 2 eingeleitet, wobei durch ein Auskragen des Armes 12 eine Kollision der Holzstämme 15 mit dem Arm 12 bzw. dem Seil 6 auf zuverlässige Weise verhindert ist.

Eine erfindungsgemäße ausgebildete Vorrichtung sowie ein entsprechendes Verfahren eignet sich besonders gut dazu, Holzstämme 15 in unwegsamem, steilem Gelände zu transportieren, ohne einen Untergrund zu beschädigen. Gleichzeitig wird ein gegeneinander Arbeiten von Windenantrieb und Fahrwerksantrieb, welche jeweils beispielsweise einen Dieselmotor mit 300 PS bis 500 PS aufweisen können, soweit möglich vermieden, sodass mechanische Belastungen des Transportfahrzeuges 2 reduziert werden und eine hohe Effizienz erreichbar ist, wobei insbesondere Verschleißteile nur sehr selten getauscht werden müssen. Aufgrund der Möglichkeit des Transportfahrzeuges 2, zuvor aufgezeichnete Wegstrecken später selbstständig zurückzulegen wird ein besonders effizientes Verfahren ermöglich, welches mit besonders geringem Personaleinsatz und gleichzeitig prozesssicher durchführbar ist.

## Patentansprüche

1. Vorrichtung zum Transportieren von Holz in steilem Gelände aufweisend eine mobile Winde (1) und ein über ein Seil (6) mit der Winde (1) verbindbares mobiles Transportfahrzeug (2) mit einem Fahrwerk, wobei die Winde (1) einen Windenantrieb zum Auf- bzw. Abwickeln des Seiles (6) und das Transportfahrzeug (2) einen Fahrantrieb zum Antrieb des Fahrwerkes aufweist, **dadurch gekennzeichnet, dass** das Transportfahrzeug (2) und die Winde (1) durch eine Datenverbindung verbunden sind, wobei das Transportfahrzeug (2) einen Sensor zur Bestimmung einer Fahrtrichtung (16) relativ zur Seilwinde aufweist und wobei eine Datenverarbeitungseinrichtung vorgesehen ist, welche mit dem Fahrantrieb und dem Windenantrieb verbunden ist, sodass durch die Datenverarbeitungseinrichtung eine Seilgeschwindigkeit und eine Fahrantriebsgeschwindigkeit abhängig von einer Fahrtrichtung (16) des Transportfahrzeuges (2) automatisiert einstellbar sind.

2. Vorrichtung nach Anspruch 1, **dadurch gekennzeichnet, dass** das Transportfahrzeug (2) einen Vorderwagen (4) und einen mit dem Vorderwagen (4) um eine etwa vertikale Drehachse (9) verbundenen Hinterwagen (5) aufweistwobei bevorzugt vorgesehen ist, dass Vorderwagen (4) und Hinterwagen (5) gesonderte Fahrwerke aufweisen.

3. Vorrichtung nach Anspruch 2, **dadurch gekennzeichnet, dass** Vorderwagen (4) und Hinterwagen (5) unabhängig voneinander antreibbar sind, wobei insbesondere eine Antriebskraft am Vorderwagen (4) von einer Antriebskraft am Hinterwagen (5) und/oder eine Antriebsgeschwindigkeit des Vorderwagens (4) von einer Antriebsgeschwindigkeit des Hinterwagens (5) abweichen kann.

4. Vorrichtung nach einem der Ansprüche 1 bis 3, **dadurch gekennzeichnet, dass** das Fahrwerk des Transportfahrzeuges (2) als Raupenfahrwerk (3) ausgebildet ist.

5. Vorrichtung nach einem der Ansprüche 1 bis 4, **dadurch gekennzeichnet, dass** das Transportfahrzeug (2) eine Klemmeinrichtung (14) zum Klemmen von Holz aufweist, welche insbesondere um eine vertikale Achse drehbar mit dem Fahrwerk verbunden ist wobei bevorzugt vorgesehen ist, dass die Klemmeinrichtung (14) zwei relativ zueinander um eine etwa horizontale Klemmachse (11) schwenkbare Klemmschenkel (10) aufweist, zwischen welchen Holzstämme (15) klemmbar sind.

6. Vorrichtung nach einem der Ansprüche 1 bis 5, **dadurch gekennzeichnet, dass** das Transportfahrzeug (2) einen Arm (12) aufweist, welcher um eine vertikale Achse drehbar mit dem Fahrwerk verbunden ist, über welchen Arm (12) das Seil (6) derart mit dem Transportfahrzeug (2) koppelbar ist, dass das Transportfahrzeug (2) durch das Seil (6) bewegbar ist.

7. Vorrichtung nach Anspruch 6, **dadurch gekennzeichnet, dass** der Arm (12) mit einem mittleren Bereich des Transportfahrzeuges (2) verbunden ist, insbesondere einem Bereich mittig zwischen Vorderwagen (4) und Hinterwagen (5).

8. Vorrichtung nach einem der Ansprüche 1 bis 7, **dadurch gekennzeichnet, dass** das Transportfahrzeug (2) einen GPS-Sensor aufweist.

9. Vorrichtung nach einem der Ansprüche 1 bis 8, **dadurch gekennzeichnet, dass** das Transportfahrzeug (2) manuell, insbesondere mit einer Fernbedienung, betätigbar ist, wobei eine Datenverarbeitungseinrichtung vorgesehen ist, mit welcher ein Weg, den das Transportfahrzeug (2) bei einer manuellen Betätigung zurücklegt, aufgezeichnet werden kann, wobei das Transportfahrzeug (2) zum selbsttätigen Zurücklegen von Wegstrecken entsprechend zuvor aufgezeichneten Wegen eingerichtet ist.

10. Vorrichtung nach einem der Ansprüche 1 bis 9, **dadurch gekennzeichnet, dass** die Vorrichtung dazu eingerichtet ist, das Transportfahrzeug (2) mit Hilfe der Winde (1) einen Hang hinauf zu bewegen, wobei eine Aufteilung einer Antriebsleistung zwischen Winde (1) und Transportfahrzeug (2) in der Weise erfolgt, dass vom Transportfahrzeug (2) nur jener Teil der Antriebsleistung aufgebracht wird, der für eine Bewegung des Transportfahrzeuges (2) quer zur Seilrichtung (13) erforderlich ist, um eine Belastung für einen Untergrund zu minimieren.

11. Verfahren zum Transportieren von Holz in steilem Gelände mit einer Vorrichtung, welche eine mobile Winde (1) und ein über ein Seil (6) mit der Winde (1) verbundenes mobiles Transportfahrzeug (2) aufweist, insbesondere mit einer Vorrichtung nach einem der Ansprüche 1 bis 10, wobei Winde (1) und Transportfahrzeug (2) während des Verfahrens über eine Datenverbindung verbunden sind und eine aktuelle Fahrtrichtung (16) des Transportfahrzeuges (2) automatisiert erfasst wird, wobei während des Verfahrens des Transportfahrzeuges (2) zur Winde (1) hin eine Seilgeschwindigkeit und eine Fahrantriebsgeschwindigkeit abhängig von der Fahrtrichtung (16) des Transportfahrzeuges (2) durch eine Datenverarbeitungseinrichtung aufeinander abgestimmt werden.

12. Verfahren nach Anspruch 11, **dadurch gekennzeichnet, dass** das Holz mit dem Transportfahrzeug (2) von einem windenfernen Bereich zu einem windennahen Bereich transportiert wird, wonach das Holz im windennahen Bereich vom Transportfahrzeug (2) abgeladen wird und das Transportfahrzeug (2) ohne Beladung vom windennahen Bereich in einen windenfernen Bereich verfahren wird, um weiteres Holz aufzunehmen.

13. Verfahren nach Anspruch 12, **dadurch gekennzeichnet, dass** das Verfahren vom windennahen Bereich in den windenfernen Bereich zumindest teilweise durch eine manuelle Steuerung erfolgt, wobei ein Weg, welchen das Transportfahrzeug (2) während der manuellen Steuerung zurücklegt, durch eine Datenverarbeitungseinrichtung aufgezeichnet wird.

14. Verfahren nach Anspruch 13, **dadurch gekennzeichnet, dass** das Verfahren vom windennahen Bereich in den windenfernen Bereich zumindest teilweise automatisiert entlang eines in einem vorhergehenden Verfahrensschritt aufgezeichneten Weges erfolgt.

15. Verfahren nach einem der Ansprüche 11 bis 14, **dadurch gekennzeichnet, dass** eine durch die Winde (1) auf das Transportfahrzeug (2) aufgebrachte Kraft und eine durch ein Fahrwerk des Transportfahrzeuges (2) aufgebrachte Kraft durch die Datenverarbeitungseinrichtung derart aufeinander abgestimmt werden, dass ein möglichst großer Anteil einer für eine Bewegung des Transportfahrzeuges (2) von einem windenfernen Bereich in einen windennahen Bereich erforderlichen Kraft durch die Winde (1) und das Seil (6) aufgebracht werden und lediglich eine darüber hinaus gehende Kraft, insbesondere für eine Bewegung quer zur Seilrichtung (13), durch das Fahrwerk aufgebracht wird.

## Claims

1. An apparatus for transporting wood in steep terrain, having a mobile winch (1) and a mobile transport vehicle (2), which can be connected to the winch (1) via a cable (6) and has a chassis, wherein the winch (1) has a winch drive for winding and unwinding the cable (6), and the transport vehicle (2) has a travel drive for driving the chassis, **characterised in that** the transport vehicle (2) and the winch (1) are connected by a data connection, wherein the transport vehicle (2) has a sensor for determining a direction of travel (16) relative to the cable winch, and wherein a data-processing device is provided, which is connected to the travel drive and the winch drive so that a cable speed and a travel drive speed can be adjusted by the data-processing device in an automated manner depending on a direction of travel (16) of the transport vehicle (2).

2. The apparatus according to Claim 1, **characterised in that** the transport vehicle (2) has a front car (4) and a rear car (5), which is connected to the front car (4) about an approximately vertical rotational axis (9), wherein it is preferably provided for the front car (4) and the rear car (5) to have separate chassis.

3. The apparatus according to Claim 2, **characterised in that** the front car (4) and the rear car (5) can be driven independently of one another, wherein in particular a drive force at the front car (4) can differ from a drive force at the rear car (5), and/or a drive speed of the front car (4) can differ from a drive speed of the rear car (5).

4. The apparatus according to any one of Claims 1 to 3, **characterised in that** the chassis of the transport vehicle (2) is designed as a tracked chassis (3).

5. The apparatus according to any one of Claims 1 to 4, **characterised in that** the transport vehicle (2) has a clamping device (14) for clamping wood, which clamping device is in particular connected to the chassis rotatably about a vertical axis, wherein it is preferably provided for the clamping device (14) to have two clamping limbs (10), which can be pivoted relative to one another about an approximately horizontal clamping axis (11) and between which logs (15) can be clamped.

6. The apparatus according to any one of Claims 1 to 5, **characterised in that** the transport vehicle (2) has an arm (12), which is connected to the chassis rotatably about a vertical axis, via which arm (12) the cable (6) can be coupled to the transport vehicle (2) such that the transport vehicle (2) can be moved by the cable (6).

7. The apparatus according to Claim 6, **characterised in that** the arm (12) is connected to a central region of the transport vehicle (2), in particular to a region in the centre between the front car (4) and the rear car (5).

8. The apparatus according to any one of Claims 1 to 7, **characterised in that** the transport vehicle (2) has a GPS sensor.

9. The apparatus according to any one of Claims 1 to 8, **characterised in that** the transport vehicle (2) can be operated manually, in particular with a remote control, wherein a data-processing device is provided, with which a path travelled by the transport vehicle (2) during manual operation can be recorded, wherein the transport vehicle (2) is configured to automatically travel path sections according to previously recorded paths.

10. The apparatus according to any one of Claims 1 to 9, **characterised in that** the apparatus is configured to move the transport vehicle (2) up a slope with the aid of the winch (1), wherein a drive power is divided between the winch (1) and the transport vehicle (2) such that the transport vehicle (2) applies only the portion of the drive power that is necessary for a movement of the transport vehicle (2) transverse to the cable direction (13), in order to minimise loading on a subsurface.

11. A method for transporting wood in steep terrain using an apparatus that has a mobile winch (1) and a mobile transport vehicle (2) that is connected to the winch (1) via a cable (6), in particular using an apparatus according to any one of Claims 1 to 10, wherein the winch (1) and the transport vehicle (2) are connected via a data connection during movement, and a current direction of travel (16) of the transport vehicle (2) is detected in an automated manner, wherein, while the transport vehicle (2) is moved towards the winch (1), a cable speed and a travel drive speed are coordinated with one another by a data-processing device depending on the direction of travel (16) of the transport vehicle (2).

12. The method according to Claim 11, **characterised in that** the wood is transported using the transport vehicle (2) from a region remote from the winch to a region close to the winch, after which the wood is unloaded from the transport vehicle (2) in the region close to the winch, and the transport vehicle (2) is moved without load from the region close to the winch to a region remote from the winch in order to receive more wood.

13. The method according to Claim 12, **characterised in that** the movement from the region close to the winch to the region remote from the winch is carried out at least partially by manual control, wherein a path travelled by the transport vehicle (2) during manual control is recorded by a data-processing device.

14. The method according to Claim 13, **characterised in that** the movement from the region close to the winch to the region remote from the winch is carried out in an at least partially automated manner along a path recorded in a preceding method step.

15. The method according to any one of Claims 11 to 14, **characterised in that** a force applied to the transport vehicle (2) by the winch (1) and a force applied by a chassis of the transport vehicle (2) are coordinated with one another by the data-processing device such that the greatest possible proportion of a force necessary for moving the transport vehicle (2) from a region remote from the winch to a region close to the winch is applied by the winch (1) and the cable (6), and only a force going beyond this, in particular for a movement transverse to the cable direction (13), is applied by the chassis.

## Revendications

1. Dispositif de transport de bois sur un terrain escarpé présentant un treuil mobile (1) et un véhicule de transport mobile (2) doté d'un châssis, pouvant être relié au treuil (1) par un câble (6), dans lequel le treuil (1) présente un mécanisme d'enroulement et de déroulement de câble (6), tandis que le véhicule de transport (2) présente un système de propulsion pour entraîner le châssis, **caractérisé en ce que** le véhicule de transport (2) et le treuil (1) sont connectés par une liaison de données, dans lequel le véhicule de transport (2) présente un capteur pour déterminer une direction de déplacement (16) par rapport au treuil et dans lequel un dispositif de traitement de données est prévu, qui est connecté au système de propulsion et à l'entraînement du treuil, de sorte que le dispositif de traitement de données ajuste automatiquement lune vitesse de câble et une vitesse de propulsion en fonction d'une direction de déplacement (16) du véhicule de transport (2).

2. Dispositif selon la revendication 1, **caractérisé en ce que** le véhicule de transport (2) présente un chariot avant (4) et un chariot arrière (5) relié au chariot avant (4) autour d'un axe de rotation approximativement vertical (9), dans lequel de préférence le chariot avant (4) et le chariot arrière (5) présentent des châssis séparés.

3. Dispositif selon la revendication 2, **caractérisé en ce que** le chariot avant (4) et le chariot arrière (5) peuvent être entraînés indépendamment l'un de l'autre, dans lequel notamment une force motrice appliquée au chariot avant (4) peut différer d'une force motrice appliquée au chariot arrière (5) et/ou une vitesse d'entraînement du chariot avant (4) peut différer d'une vitesse d'entraînement du chariot arrière (5).

4. Dispositif selon une des revendications 1 à 3, **caractérisé en ce que** le châssis du véhicule de transport (2) est conçu comme un châssis chenillé (3).

5. Dispositif selon une des revendications 1 à 4, **caractérisé en ce que** le véhicule de transport (2) présente un dispositif de serrage (14) pour le serrage du bois, qui est notamment relié de manière rotative au châssis autour d'un axe vertical, de préférence il est prévu que le dispositif de serrage (14) soit muni de deux bras de serrage (10) pivotant l'un par rapport à l'autre autour d'un axe de serrage approximativement horizontal (11), entre lesquels des grumes (15) peuvent être serrées.

6. Dispositif selon une des revendications 1 à 5, **caractérisé en ce que** le véhicule de transport (2) présente un bras (12), qui est relié de manière rotative au châssis autour d'un axe vertical, bras (12) par l'intermédiaire duquel le câble (6) peut être couplé au véhicule de transport (2) de telle sorte que le véhicule de transport (2) puisse être déplacé par le câble (6).

7. Dispositif selon la revendication 6, **caractérisé en ce que** le bras (12) est relié à une zone centrale du véhicule de transport (2), notamment une zone située au centre entre le chariot avant (4) et le chariot arrière (5).

8. Dispositif selon une des revendications 1 à 7, **caractérisé en ce que** le véhicule de transport (2) présente un capteur GPS.

9. Dispositif selon une des revendications 1 à 8, **caractérisé en ce que** le véhicule de transport (2) peut être commandé manuellement, notamment à l'aide d'une télécommande, dans lequel un dispositif de traitement de données est prévu, qui permet d'enregistrer un trajet parcouru par le véhicule de transport (2) en mode manuel, dans lequel le véhicule de transport (2) est configuré pour suivre automatiquement des trajets préenregistrés conformément à des itinéraires.

10. Dispositif selon une des revendications 1 à 9, **caractérisé en ce que** le dispositif est configuré pour déplacer le véhicule de transport (2) en montée à l'aide du treuil (1), dans lequel une répartition de la puissance motrice entre le treuil (1) et le véhicule de transport (2) est effectuée de telle sorte que le véhicule de transport (2) ne fournisse que la partie de la puissance motrice, qui est nécessaire à un déplacement du véhicule de transport (2) transversalement à la direction de câble (13), afin de minimiser une charge sur un sol.

11. Procédé de transport de bois sur un terrain escarpé au moyen d'un dispositif, qui présente un treuil mobile (1) et un véhicule de transport mobile (2) relié au treuil (1) par un câble (6), notamment au moyen d'un dispositif selon une des revendications 1 à 10, dans lequel le treuil (1) et le véhicule de transport (2) sont connectés par une liaison de données pendant le procédé et une direction de déplacement (16) actuelle du véhicule de transport (2) est automatiquement détectée, dans lequel pendant le déplacement du véhicule de transport (2) vers le treuil (1), une vitesse de câble et une vitesse d'entraînement sont coordonnées par un dispositif de traitement de données en fonction de la direction de déplacement (16) du véhicule de transport (2).

12. Procédé selon la revendication 11, **caractérisé en ce que** le bois est transporté par le véhicule de transport (2) d'une zone éloignée du treuil vers une zone proche du treuil, après quoi le bois est déchargé du véhicule de transport (2) dans la zone proche du treuil, puis le véhicule de transport (2) est déplacé à vide de la zone proche du treuil vers une zone éloignée du treuil afin de charger davantage de bois.

13. Procédé selon la revendication 12, **caractérisé en ce que** le déplacement de la zone proche du treuil vers la zone éloignée du treuil est effectué, au moins partiellement, par commande manuelle, dans lequel un trajet, qui est parcouru par le véhicule de transport (2) pendant la commande manuelle est enregistré par un dispositif de traitement de données.

14. Procédé selon la revendication 13, **caractérisé en ce que** le déplacement de la zone proche du treuil vers la zone éloignée du treuil est effectué, au moins partiellement, automatiquement le long d'un trajet enregistré lors d'une étape de procédé précédente.

15. Procédé selon une des revendications 11 à 14, **caractérisé en ce que** une force appliquée au véhicule de transport (2) par le treuil (1) et une force appliquée par un châssis du véhicule de transport (2) sont coordonnées par le dispositif de traitement de données de telle sorte qu'une plus grande proportion possible d'une force nécessaire à un déplacement du véhicule de transport (2) d'une zone éloignée du treuil vers une zone proche du treuil soit appliquée par le treuil (1) et le câble (6) et que seule la force excédant cette valeur, notamment pour un déplacement transversal à la direction de câble (13), soit appliquée par le châssis.
